Europäisches Patentamt

European Patent Office

Office européen des brevets

(11) Publication number: **0 170 150**
**B1**

# (12) EUROPEAN PATENT SPECIFICATION

(45) Date of publication of patent specification: **12.10.88**

(21) Application number: **85108853.4**

(22) Date of filing: **15.07.85**

(51) Int. Cl.⁴: **B 60 J 5/04**

(54) Improved vehicle door and a method for its assembly.

(30) Priority: **31.07.84 IT 6776584**

(43) Date of publication of application:
**05.02.86 Bulletin 86/06**

(45) Publication of the grant of the patent:
**12.10.88 Bulletin 88/41**

(84) Designated Contracting States:
**DE FR GB SE**

(56) References cited:
**FR-A- 597 115**
**FR-A- 849 640**
**FR-A-2 236 678**
**US-A-2 134 487**

**PATENT ABSTRACTS OF JAPAN, vol. 8, no. 185
(M-323) 1632r, 7th September 1984**

(73) Proprietor: **FIAT AUTO S.p.A.
Corso Giovanni Agnelli 200
I-10135 Torino (IT)**

(72) Inventor: **Di Giusto, Nevio
Via Guarini, 48
I-10078 Venaria (IT)**
Inventor: **Trebbi, Giorgio
Via Verdina, 8
I-10025 Pino Torinese (IT)**

(74) Representative: **Prato, Roberto et al
c/o Ingg. Carlo e Mario Torta Via Viotti 9
I-10121 Torino (IT)**

Courier Press, Leamington Spa, England.

## Description

This invention relates to a method for mounting a door on a vehicle body and to an improved vehicle door formed in such a manner as to facilitate its assembly according to such a method.

Vehicle doors such that of JP—A—5984622 are normally formed from a load-bearing frame defining internally a compartment for housing the mobile window pane and the devices which operate the door and said window pane, and from an outer covering panel welded to the load-bearing frame and disposed so that it closes said compartment. These two elements, already in an assembled state, are mounted on the body and painted together therewith. On the vehicle assembly line, operating personnel then assemble the mobile window pane and other said auxiliary devices in said compartment through suitable apertures provided in the inside of the door, these then being closed by a finishing panel. From FR—A—2236678 which corresponds to the pre-characterizing part of Claim 2 it is also known a vehicle door in which the outer panel is not welded to the frame but, on the contrary, rotatably connected thereto in order to allow easy dismounting of the outer panel both from the inside and outerside in case of accident.

In any case such known doors require relatively lengthy and difficult assembly operations to be carried out, and compel the operator to often work blindly through small-dimension apertures and passages, while mostly following the body as it moves along the assembly line. In fact, also the door of FR—A—2,236,678 cannot be easily assembled or repaired because its structure is studied for an easy and rapid dismounting only and not also for an easy assembly; on the contrary the assembly of such a door is difficult due to the complex movements that are necessary to insert the outer panel on the frame. Under these conditions it is apparent that it is impossible to carry out automatic assembly in the case of known doors, and that any maintenance on the door structure or mechanisms contained in said compartment is difficult.

An object of the present invention is to provide a door the structure of which ensures easy and rapid assembly and maintenance both of the door itself and of the mobile window pane and auxiliary devices housed inside the door.

A further object of the invention is to provide an assembly method for said door which enables automatic devices such as robotised assembly lines to be used should this be desirable.

Said objects are attained according to the present invention by a method for mounting a door on a vehicle, characterised by comprising the following stages:
—hinging to the vehicle body a load-bearing frame internally defining a compartment, and hinging one end of an outer covering panel to the load-bearing frame in such a manner as to close said compartment;

—painting the structure thus obtained together with the body;
—rotating the outer panel on its hinges relative to the frame in order to make said compartment accessible from the outside;
—mounting a mobile window pane and the necessary mechanical devices inside the compartment;
—closing said compartment by rotating said outer panel on its hinges in the opposite direction; and
—securely locking said outer panel to the load-bearing frame.

The invention also relates to a vehicle door of the type comprising a frame defining internally a compartment for housing a mobile window pane and the mechanical door devices, means for supporting said window pane and mechanical devices, and an outer covering panel disposed so as to close said compartment characterized in that a front end of said outer panel is pivotally connected by first hinges to a front upright of said frame provided with second hinges arranged to connect said upright to a vehicle body; said first and second hinges having their respective axes of rotation coaxial and coincident and said front end of said covering panel being disposed so that it projects beyond said upright and is bounded towards this latter by a rib which is arranged to cooperate with said upright in order to provide lateral closure of said compartment, and is provided on the same side of said panel as its inner surface which faces said compartment.

The present invention will be more apparent from the non-limiting description of two embodiments thereof given hereinafter with reference to the accompanying drawings, in which:
Figure 1 is a perspective view of a door constructed in accordance with the present invention;
Figure 2 is an exploded perspective view of the door of Figure 1;
Figure 3 is a section on the line III—III of a portion of the door of Figure 1; and
Figure 4 shows the same section through the same detail as Figure 3, but of a possible modification of the door of the invention.

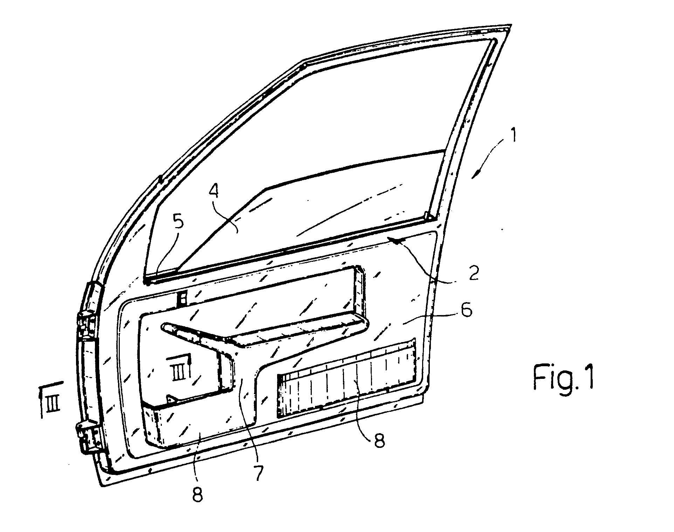

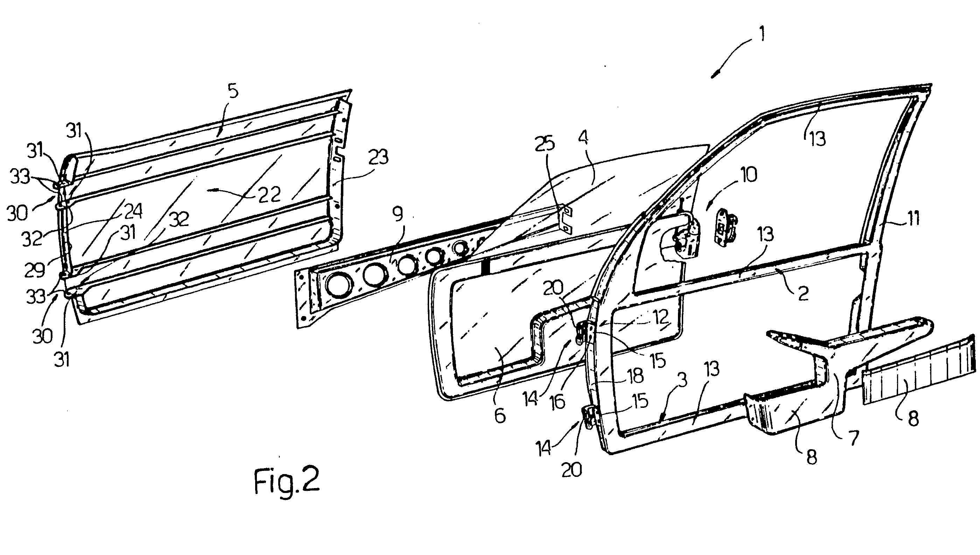

In Figures 1 and 2, the reference numeral 1 indicates overall a door for a vehicle of any known type, for example a motor vehicle, comprising a load-bearing frame 2 defining internally a compartment 3 for housing a descending window pane 4 and respective known mechanical operating devices, not shown for simplicity, for the window pane and door, and an outer covering panel 5 which is disposed on the outside of said door 1 such that when the door 1 is mounted it closes the compartment 3. The door 1 also comprises a finishing panel 6 provided with respective inner arm rests 7 and respective object-carrying pockets 8, an inner stiffening cross-member 9 fixed to the frame 2 and contained in the compartment 3 for supporting the window pane 4 and said known mechanical devices, and a lock 10 fixed in a position corresponding with a rear upright 11 of the frame 2, preferably at the cross-member 9.

In the illustrated non-limiting example, the frame 2 comprises in addition to the rear upright 11 a respective front upright 12 and respective connecting cross-members 13, which upperly define a window aperture to be closed by the descending window pane 4, and lowerly define said housing compartment 3 which when the door 1 is mounted is closed on the inside of the door by the finishing panel 6 and on the outside by the covering panel 5. This latter is constructed, as is the frame 2, from suitable metal plate which is blanked, bent and welded together in known manner, or can be constructed by moulding a suitable plastics material, and is preferably of such dimensions and shape as to engage with the lower part of the frame 2 to close the compartment 3, so that the window aperture in the door 1 is defined only by the upper part of the frame 2.

According to the invention, the upright 12 is provided with a pair of respective hinges 14 arranged to allow the frame 2 to be hinged to the body, not shown for simplicity, of any vehicle of any known type, also not shown for simplicity. According to the invention, the hinges 4 are defined by a pair of substantially L-shaped brackets 15 fixed rigidly, for example by suitable screws 16, to the front wall 18 of the upright 12, to project frontwards from this latter.

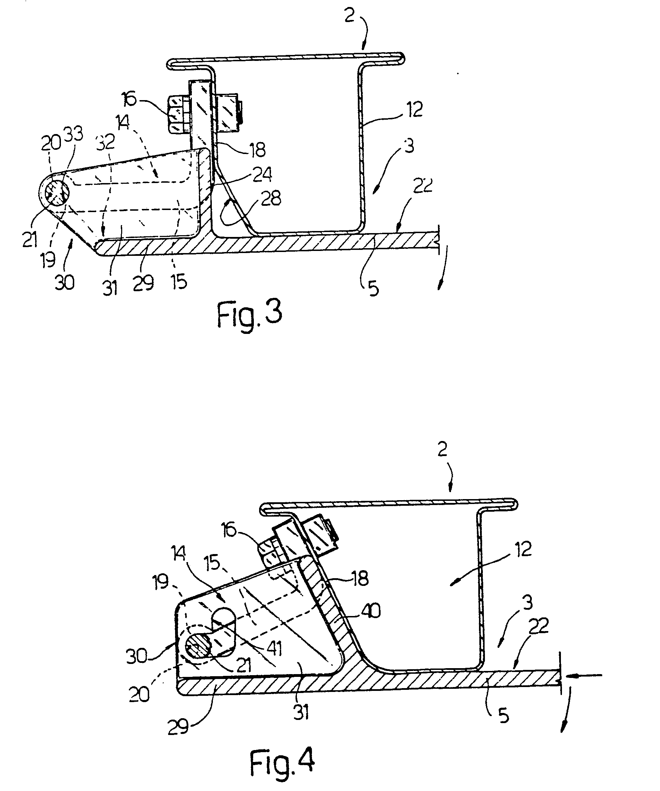

With reference also to Figure 3, that end 19 of the brackets 15 which is opposite that fixed to the wall 18 projects to a predetermined distance from the upright 12 and is provided with a transverse through bore 20 having its axis substantially vertical and arranged to idly house, when the door 1 is mounted, a respective hinge pin 21 of any known type. Preferably the ends 19 of the brackets 15 are of forked configuration in order to facilitate the introduction and withdrawal of the pins 21 and to allow engagement with the body hinges.

On the same side as its inner surface 22 which faces the compartment 3, the outer panel 5 is provided, in positions corresponding with the uprights 11 and 12, with respective projecting transverse ribs, indicated by 23 and 24 respectively, formed in a position parallel and adjacent to the corresponding uprights 11 and 12 and arranged to cooperate with these latter to define therewith, for example, suitable labyrinth seals in order to seal the compartment 3 in a substantially dust-tight manner. The rear rib 23 is formed preferably perpendicular to the surface 22 and is arranged for secure fixing, by suitable locking means such as screws and/or pins, to the upright 11 and to one end 25 of the cross-member 9. The rib 24 according to the illustrated non-limiting example is also disposed substantially perpendicular to the surface 22 and is formed parallel and adjacent to the upright 12 in a position facing an oblique wall 28 of this latter which is adjacent to the wall 18 and to the ends 19 of the corresponding brackets 15 fixed to this latter.

The rib 24 is provided in a position corresponding with the front end 29 of the panel 5, this end being provided with a further pair of hinges 30 which enable the panel to be hinged to the frame 2, and which when the door 1 has been mounted extend further beyond the upright 12, towards which the end 29 is bounded by the rib 24 itself, which thus provides lateral closing of the compartment 3. The hinges 30 are provided preferably in a position corresponding to that occupied by the hinges 14, and are each defined by a respective pair of projecting lugs 31 formed rigid with the panel 5 and preferably integral with the rib 24, relative to which they project perpendicularly from the opposite end to the rear rib 23. In a preferred embodiment of the invention, the hinges 14 and 30 defined by the brackets 15 and lugs 31 have their respective axes of rotation coaxial and coincident, in that the lugs 31 define between themselves two respective seats 32 in which, when the door 1 is mounted, the corresponding ends 19 of the brackets 15 are received, and which are provided, in positions corresponding with the bores 20, with respective through bores 33 coaxial with the bores 20 and arranged for idle engagement by the said pin 21, which is thus simultaneously able to hinge the panel 5 to the frame 2, and to hinge this latter and thus the entire door 1 to said body, not shown, of any vehicle of known type.

The door 1 can be assembled in the following manner: when the construction of the frame 2 and panel 5 has been completed by known methods on the sheet metal lines, the brackets 15 are fixed to the upright 12 in a suitable position so as to enable them to be inserted into the seats 32, after which the panel 5 is disposed on the frame 2 in such a manner as to close the compartment 3, by mounting the ribs 23 and 24 over the uprights 12 and 13 being careful to insert the brackets 15 into the seats 32 between the corresponding pairs of lugs 31. The structure obtained in this manner is then securely assembled by hinging the frame 2 and panel 5 together, and simultaneously hinging these to the body of the vehicle on which the door 1 is to be mounted, by simply placing the hinges 14 and 13, coupled in the aforesaid manner, in positions corresponding with the hinges carried by the vehicle body, and then inserting the pins 21 through the bores 20 and 33. When the pins 21 have been inserted, they determine both the said hinging of the panel 5 to the frame 2 and the said hinging of both of these to the vehicle body. The structure thus obtained, when mounted on the body, can be painted together with it by processes of known type, possibly keeping the panel 5 rotated from its closed position in order to facilitate entry of the paint into the compartment 3, after which it is conveyed to the assembly line.

The window pane 4, its support members and said mechanical operating devices for the window pane 4 and door 1, such as the window regulator, its drive motor, the transmission linkages for the lock 10 and the like, are fixed on the cross-member 9 simultaneously in a suitable assembly station, using automatic machines. The finishing panel 6 with the possible control switch for the window regulator and the internal part of the lock 10 is also preassembled on the cross-member 9. The external part of the lock 10 is mounted directly on the frame 2 against the upright 11, so that the structure formed by the frame 2 and panel 5 can be kept closed against the body in order to prevent damage during transportation along the assembly line. Finally, an operator or robotised machine rotates the panel 5 relative to the frame 2 on the pin 21 in the direction of the arrow shown in Figure 3, in order to open the outer structure of the door 1 in the manner of a book, so making the compartment 3 accessible from the outside, he then inserting thereinto, by means of a single operation, the preassembled sub-unit constituted by the cross-member 9, the window pane 4, the said mechanical devices and the finishing panel 6. When inserted into the compartment 3, said sub-unit remains housed therein and the panel 6 closes the compartment 3 on the inside of the door.

Finally, the cross-member 9 is fixed to the frame 2 for example by suitable screws, and the gasket which surrounds the window pane is then mounted thereon, after which, having rotated the panel 5 in the opposite direction until it closes the compartment 3, said panel 5 is fixed to the frame 2, by fixing the rib 23 to the upright 11 using screws, pins or other locking devices. All the described operations can be carried out without moving the frame 2, which remains closed against the vehicle body, by virtue of the presence of the oblique wall 28 on the upright 12, which enables the panel 5 to be rotated relative to the frame 2 while preventing any interference between the rib 24 and upright 12 during the rotation of the panel 5. Any accidental movement of the frame 2 is prevented by premounting the external part of the lock 10 thereon. It is apparent from the described procedure that the operations involved in mounting the door 1 on the assembly line are reduced simply to the opening and closure of the panel 5 and the mounting of the window pane surround gasket and the insertion of an already preassembled unit into the compartment 3.

Figure 4 shows a possible modification of that detail of the door 1 shown in Figure 3. All details similar or equal to those already described are indicated by the same reference numerals for simplicity.

In particular, according to the modification of Figure 4, the front wall 18 of the upright 12 lacks the adjacent wall 28, and is disposed obliquely to the inner surface 22 of the panel 5. The front end 29 of this latter is bounded not by the rib 24 but by a rib 40 which projects obliquely from the inner surface 22 and, when the door 1 is mounted, is disposed directly in contact with the oblique wall 18 instead of only in a position facing and adjacent to this latter, as in the case of the rib 24 described heretofore. In this manner, as the rib 40 and wall 18 of the upright 12 are in close contact with each other, the compartment 3 is sealed in a dust-tight manner, thus improving the protection thereof compared with the embodiment of Figure 3. In order to enable the panel 5 to be hinge-rotated relative to the frame 2, the lugs 31 projecting from the end 29, and which define the hinges 30, are provided, in positions corresponding with the bores 20, with respective slots 41 which are substantially of L-shape and pass through said lugs 31, instead of the corresponding bores for housing the pin 21 which are shown in the embodiment of Figure 3. The opposite ends of the slots 41 are rounded to substantially the same dimensions as the bores 20 so that they can idly engage the pins 21. In order to open the compartment 3, it is firstly necessary to push the panel 5 in the direction of the arrow before commencing its rotation, in order to distance it from the upright 12. In doing this, the pins 20 are moved inside the slots 41 from one end to the other thereof, so causing the wall 18 to withdraw from the rib 40 by a distance sufficient to enable the panel 5, when pulled in a direction such as to withdraw it from the frame 2, to rotate relative to the frame 2 in a manner analogous to that heretofore described.

The advantages attainable with the present invention are apparent.

All the operations involved in assembling the door can be carried out automatically and with extreme rapidity and ease, and painting of the compartment 3 is facilitated. Maintenance of the devices housed in the compartment 3 is also enormously facilitated, in that it is necessary only to disengage the rib 23 from the upright 11 to be able, even after assembly, to rotate the panel 5 relative to the frame 2 and thus make the compartment 3 accessible from the outside. Finally, it is apparent that should the panel 5 become damaged by impact, it can be replaced without having to replace the entire door 1, with consequent considerable saving for the user.

## Claims

1. A method for mounting a door on a vehicle, characterised by comprising the following stages:
—hinging to the vehicle body a load-bearing frame (2) internally defining a compartment (3), and hinging one end (29) of an outer covering panel (5) to the load-bearing frame (2) in such a manner as to close said compartment (3);
—painting the structure thus obtained together with the body;
—rotating the outer panel (5) on its hinge relative to the frame (2) in order to make said compartment (3) accessible from the outside;
—mounting a mobile window pane (4) and the necessary mechanical devices inside the compartment;
—closing said compartment (3) by rotating said outer panel (5) on its hinges in the opposite direction; and
—securely locking said outer panel to the load-bearing frame (2).

2. A vehicle door (1) of the type comprising a frame (2) defining internally a compartment (3) for housing a mobile window pane (4) and the mechanical door devices, means for supporting said window pane (4) and mechanical devices, and an outer covering panel (5) disposed so as to close said compartment (3), characterized in that a front end (29) of said outer panel (5) is pivotally connected by first hinges (30) to a front upright (12) of said frame (2) provided with second hinges (14) arranged to connect said upright (12) to a vehicle body; said first and second hinges (14, 30) having their respective axes of rotation coaxial and coincident and said front end (29) of said covering panel (5) being disposed so that it projects beyond said upright (12) and is bounded towards this latter by a rib (24, 40) which is arranged to cooperate with said upright (12) in order to provide lateral closure of said compartment (3), and is provided on the same side of said panel (5) as its inner surface (22) which faces said compartment (3).

3. A door (1) as claimed in claim 2, characterised in that said rib (24) is substantially perpendicular to said inner surface (22) of said panel (5), and is formed parallel and adjacent to said upright (12) in a position facing an oblique wall (28) of this latter, said first hinges (30) comprising two pairs of respective projecting lugs (31) formed rigidly with said outer panel (5) and said second hinges (14) comprising a pair of respective brackets (15) substantially of L shape and fixed rigidly to said upright (12) of said frame (2); said hinges (30, 14) further comprising a pin (21) connecting the outer panel (5) to the frame (2) and housed idly in respective coaxial bores (20, 33) provided through said brackets (15) and said lugs (31), these latter defining respective seats (32) in which said brackets (15) are housed.

4. A door (1) as claimed in claim 2, characterised in that said rib (40) projects obliquely from said inner surface (22) of the panel (5) and is disposed in contact against a corresponding oblique wall (18) of said upright (12), said first hinges (30) comprising two pairs of respective projecting lugs (31) formed rigidly with the said outer panel (5) and said second hinges (14) comprising a pair of respective brackets (15) substantially of L shape and fixed rigidly to said upright (12) of the frame (2) said hinges (30, 14) further comprising a pin (21) which connects the outer panel (5) and frame (2) together and is idly housed in respective through bores (20) provided through said L-shaped brackets (15) and in respective substantially L-shaped slots (41) provided through said projecting lugs (31).

**Patentansprüche**

1. Verfahren für die Montage einer Wagentür, durch folgende Arbeitsphasen gekennzeichnet:
—gelenkige Befestigung am Karosseriekörper eines Lastaufnahmerahmens (2), welcher im Inneren eines Abteils (3) begrenzt ist und gelenkige Befestigung des Endes (29) einer äusseren Abdeckplatte (5) am Rahmen (2), sodass das Abteil (3) abgeschlossen ist;

Lackieren der so erhaltenen Struktur zusammen mit der Karosserie;
—die äussere Abdeckplatte (5) an dem Scharnier gegenüber des Rahmens (2) schwenken um dadurch das Abteil (3) von aussen zugänglich zu machen;
—innerhalb des Abteils (3) ein bewegliches Fensterglas (4) sowie die notwendigen mechanischen Teile montieren;
—das Abteil (3) durch Schwenken im Gegensinne der Aussenplatte (5) an den Scharnieren abschliessen und
—die Aussenplatte sicher am Rahmen (2) befestigen.

2. Wagentür (1) von der Art mit einem Rahmen (2), welcher innen ein Abteil (3) zur Aufnahme eines Fensterglases (4), sowie mechanische Teile der Türe, Traggelenke für das Fenster (4) und mechanische Teile, sowie eine innere Abdeckplatte (5) begrenzt die das Abteil (3) abschliesst, dadurch gekennzeichnet dass das Vorderende der Aussenplatte (5) schwenkbar mittels eines ersten scharniers (30) an einem Vorderpfosten (12) des Rahmens (2) verbunden ist, welcher zweite Scharniere (14) besitzt die den Pfosten (12) mit der Karosserie verbinden, wo die Drehachsen der ersten und zweiten Scharniere (14, 30) koaxial und deckend sind und das Vorderende (29) der Abdeckplatte (5) so angeordnet ist, dass es über den Pfosten (12) ragt und gegenüber diesem von einem Steg (24, 40) begrenzt wird der mit dem Pfosten zusammenarbeitet um einen seitlichen Abschluss des Abteils (3) zu bewirken und auf derselben Seite die Platte (5) als Innenfläche hat, die zum Abteil (3) zeigt.

3. Wagentür (1) nach Anspruch 2, dadurch gekennzeichnet, dass der Steg (24) im wesentlichen senkrecht zur Innenfläche (22) der Platte (5) verläuft die parallel neben der Pfosten (12) in einer gegenüberliegenden Lage zu seiner geneigten Wand (28) geformt ist, wo die ersten Scharniere (30) zwei vorspringende, starr an die Aussenplatte (5) angeformte Zungenpaare (31) aufweist und die zweiten Scharniere (14) ein entsprechendes L-förmiges Bügelpaar (15) enthalten die starr am Pfosten (12) befestigt sind und wo die Scharniere (30, 14) ausserdem einen Bolzen (21) aufweisen, der die Aussenplatte (5) mit dem Rahmen (2) verbindet und der lose in entsprechenden koaxialen, durch die Bügel (15) und Zungen (31) gehende Bohrungen (20, 33) sitzt, wo letztere entsprechende Sitze (32) begrenzen in denen die Bügel (15) lagern.

4. Wagentür (1) nach Anspruch 2, dadurch gekennzeichnet dass der Steg (40) schräg von der Innenfläche (22) der Platte (5) absteht und gegen eine entsprechende schräge Wand (18) des Pfostens (12) stösst, wo die ersten Scharniere (30) zwei entsprechende vorspringende und starr an der Aussenplatte (5) befestigte Zungenpaare (31) aufweist und die zweiten Scharniere (14) entsprechende L-förmige und fest am Pfosten (12) des Rahmens (2) montierte Bügelpaare (15) besitzt, wo die Scharniere (30, 14) ausserdem einen Bolzen (21) besitzen, der die Aussenplatte (5) mit dem Rahmen (2) verbindet und der lose in entsprechenden durch die L-förmigen Bügel gehende Bohrungen (20) steht und in entsprechenden L-förmigen durch die hervorstehenden Zungen (31) gehende Schlitzen (41) gelagert ist.

**Revendications**

1. Procédé pour monter une porte sur un véhicule, caractérisé en ce qu'il comporte les stades suivants:

—articuler sur la carrosserie du véhicule un cadre porteur (2) définissant à l'intérieur un compartiment (3), et articuler une extrémité (29) d'un panneau de revêtement extérieur (5) sur le cadre porteur (2) de manière à fermer ce compartiment (3);

—peindre la structure ainsi obtenue en même temps que la carrosserie;

—faire pivoter le panneau extérieur (5) sur ses articulations par rapport au cadre (2) afin de pouvoir accéder au compartiment (3) de l'extérieur;

—monter une vitre mobile (4) et les dispositifs mécaniques nécessaires à l'intérieur du compartiment;

—fermer ce compartiment (3) en faisant pivoter le panneau extérieur (5) sur ses articulations dans la direction opposée; et

—fixer le panneau extérieur sur le cadre porteur (2).

2. Porte de véhicule (1) du type comprenant: un cadre (2) définissant à l'intérieur un compartiment (3) pour loger une vitre mobile (4) et les dispositifs mécaniques de la porte, des moyens pour supporter la vitre (4) et les dispositifs mécaniques, et un panneau de revêtement extérieur (5) disposé de façon à fermer ce compartiment (3), caractérisée en ce qu'une extrémité avant (29) du panneau extérieur (5) est reliée à pivotement par des premières articulations (30) sur un montant avant (12) du cadre (2), équipé de deuxièmes articulations (14) agencées pour relier ce montant (12) à une carrosserie de véhicule, ces premières et ces deuxièmes articulations (14, 30) ayant leurs axes de rotation respectifs coaxiaux et coincidents et l'extrémité avant (29) du panneau de revêtement (5) étant disposée de façon à se projeter audelà du montant (12) et étant délimitée en direction de celui-ci par une nervure (24, 40) agencée pour coopérer avec le montant (12) afin de fermer latéralement ce compartiment (3), cette nervure étant prévue sur le même côté du panneau (5) que sa surface intérieure (22) en vis-à-vis du compartiment (3).

3. Porte (1) selon la revendication 2, caractérisée en ce que cette nervure (24) est pratiquement perpendiculaire à la surface intérieure (22) du panneau (5) et est parallèle et adjacente à ce montant (12) dans une position en vis-à-vis d'une paroi oblique (28) de ce dernier, les premières articulations (30) comportant deux paires de pattes saillantes respectives (31) solidaires du panneau extérieur (5) et les deuxièmes articulations (14) comportant une paire de ferrures respectives (15) pratiquement en forme de L et solidaires du montant (12) du cadre (2), ces articulations (30, 14) comportant en outre une broche (21) reliant le panneau supérieur (5) au cadre (2) et logée librement dans les alésages coaxiaux respectifs (20, 33) ménagés à travers ces ferrures (15) et ces pattes (31), ces dernières définissant des sièges respectifs (32) dans lesquels sont logées les ferrures (15).

4. Porte (1) selon la revendication 2, caractérisée en ce que la nervure (40) se projette en oblique de la surface intérieure (22) du panneau (5) et est disposée en contact contre une paroi oblique correspondante (18) du montant (12), les premières articulations (30) comportant deux paires de pattes saillantes respectives (31), solidaires du panneau extérieur (5) et les deuxièmes articulations (14) comportant une paire de ferrures respectives (15) pratiquement en forme de L et solidaires du montant (12) du cadre (2), ces articulations (30, 14) comportant, en outre, une broche (21) qui relie le panneau extérieur (5) et le cadre (2) et qui est logée librement dans des alésages traversants respectifs (20) ménagés à travers ces ferrures en forme d'L (15) et dans des fentes respectives pratiquement en forme d'L (41) ménagées à travers les pattes saillantes (31).

Fig.1

1

Fig.2

0 170 150

Fig.3

Fig.4

3